# EUROPEAN PATENT SPECIFICATION

(11) **EP 4 227 230 B1**
(45) Date of publication and mention of the grant of the patent: **18.12.2024**
(21) Application number: 23153239.1
(22) Date of filing: 25.01.2023
(51) Int. Cl.: B65B 11/54, B65C 9/36, B65B 11/10, B65B 35/20, B65B 41/04, B65B 57/16, G01G 19/52

(54) **WRAPPING APPARATUS**
EINWICKELVORRICHTUNG
APPAREIL D'EMBALLAGE

(30) Priority: 10.02.2022 JP 2022019586
(43) Date of publication of application: 16.08.2023
(73) Proprietor: Ishida Co., Ltd., Kyoto-shi, Kyoto 606-8392 (JP)
(72) Inventor: KAWANISHI, Naoto, Ritto-shi, Shiga 520-3026 (JP); TAI, Yuuki, Ritto-shi, Shiga 520-3026 (JP); YOSHIDA, Mitsuhiro, Ritto-shi, Shiga 520-3026 (JP)
(74) Representative: Global IP Europe Patentanwaltskanzlei

(56) References cited:
- US-A- 4 548 024

## Description

### BACKGROUND

### TECHNICAL FIELD

The present invention relates to a wrapping apparatus.

### RELATED ART

Conventionally, wrapping apparatus such as disclosed in JP2019-156410 A have been known. The wrapping apparatus of JP2019-156410 A weighs a wrapping item, conveys the wrapping item to a wrapping unit on the condition that the weighing value of the wrapping item is stable (within a threshold value), and wraps the wrapping item.

### SUMMARY

### TECHNICAL PROBLEM

In JP2019-156410 A, wrapping is started on the condition that the weighing value is stable, but the present inventor focused the problem that wrapping of a wrapping item is unable to be implemented using price as a condition.

In a conventional wrapping apparatus, although the weight of a wrapping item can be set, the price cannot be set. For this reason, in the case of implementing wrapping of a wrapping item using price as a condition, it is necessary to set the weight by dividing the price by the unit price (the price per unit weight of the wrapping item), which requires time and effort. A wrapping item whose unit price fluctuates particularly requires time and effort. For this reason, workability in the case of wrapping a wrapping item under a target price condition is poor.

US 4 548 024 A discloses an integral weigh wrapper for wrapping products in stretch film, by weighing each product as it is placed on a infeed support surface, and feeding successive weight signals to a data processor.

Thus, it is a problem of the present invention to provide a wrapping apparatus that improves workability.

### SOLUTION TO PROBLEM

A wrapping apparatus according to the present invention wraps a wrapping item in a film to make a product and includes a weighing unit, a wrapping unit, and a control unit. The weighing unit weighs the wrapping item. The wrapping unit wraps the wrapping item in the film. The control unit switches the operation of the wrapping unit depending on whether or not the product is a product for which a price condition is set. In a case where the control unit judges that the product is a product for which the price condition is set, the control unit calculates a price of the product based on the weighing result in the weighing unit, and when the calculated price meets the price condition the control unit causes wrapping of the wrapping item by the wrapping unit to be executed, and when the calculated price does not meet the price condition the control unit does not cause wrapping of the wrapping item by the wrapping unit to be executed.

In the wrapping apparatus according to the present invention, the control unit first judges whether or not the product is a product for which the price condition is set, and in a case where the product is a product for which the price condition is set, the control unit calculates the price of the product from the weighing result, and when the price meets the price condition the control unit causes the wrapping unit to execute wrapping, and when the price does not meet the price condition the control unit does not cause the wrapping unit to execute wrapping. For this reason, it is not necessary for the user to set in advance a weight range in the wrapping apparatus by dividing the target price by the unit price, so workability in the case of wrapping a wrapping item under a target price condition can be improved.

According to a preferred embodiment of the present invention, the control unit has a first operating mode and a second operating mode. The first operating mode is a mode where, in the case of a product for which the price condition is not set, if the weighing value in the weighing unit is stable the control unit wraps in the wrapping unit the wrapping item loaded on the weighing unit. The second operating mode is a mode where, in the case of a product for which the price condition is set, the control unit calculates a selling price of the wrapping item based on the weight of the wrapping item when the weighing value in the weighing unit is stable and the price per unit weight and if the selling price it has calculated meets the price condition, the control unit wraps in the wrapping unit the wrapping item loaded on the weighing unit.

In the wrapping apparatus according to the above preferred embodiment, the wrapping operation is not executed in a case where the price condition is not met even if the wrapping item loaded on the weighing unit is stable, so the amount of the wrapping item can be increased or decreased on the weighing unit. Then, if the price condition is met as a result of increasing or decreasing the amount of the wrapping item, the wrapping operation can be started.

According to another preferred embodiment of the present invention, the control unit has a third operating mode. The third operating mode is a mode where, in the case of a product for which the price condition and a weight condition are set, the control unit calculates a selling price of the wrapping item based on the weight of the wrapping item when the weighing value in the weighing unit is stable and the price per unit weight and if the selling price it has calculated meets the price condition and the weight of the wrapping item when the weighing value in the weighing unit is stable meets the weight condition, the control unit wraps in the wrapping unit the wrapping item loaded on the weighing unit.

In the wrapping apparatus according to the above preferred embodiment, the wrapping operation is not executed in a case where the price condition and the weight condition are not met even if the wrapping item loaded on the weighing unit is stable, so the amount of the wrapping item can be increased or decreased on the weighing unit. Then, if the price condition and the weight condition are met as a result of increasing or decreasing the amount of the wrapping item, the wrapping operation can be started.

According to another preferred embodiment of the present invention, a wrapping apparatus further includes an input unit. The input unit inputs the price condition. The control unit judges that the product is a product for which the price condition is set in a case where the price condition has been input from the input unit.

In the wrapping apparatus according to the above preferred embodiment, the user can input the price condition from the input unit, so in a case where the user wants to wrap a product in a target price bracket, the wrapping item can be made to stand by on the weighing unit to allow the user to increase or decrease the amount of the wrapping item until the price condition input from the input unit is met. Consequently, the wrapping apparatus with improved working efficiency can be easily realized.

According to another preferred embodiment of the present invention, a wrapping apparatus further includes a product master. The product master stores product information about the product. The control unit judges that the product is a product for which the price condition is set in a case where the price condition is included in the product information called up from the product master.

In the wrapping apparatus according to the above preferred embodiment, the price condition can be registered beforehand in the product master, so by simply calling up the product information from the product master the control unit can judge whether or not the product is a product for which the price condition is set.

According to another preferred embodiment of the present invention, the price condition is a price range when selling the product.

In the wrapping apparatus according to the above preferred embodiment, a price bracket affordable to consumers can be set as the price condition, so the wrapping apparatus that can contribute to sales can be realized.

According to a preferred embodiment of the present invention, a wrapping apparatus further includes a label printer. The label printer prints information about the product on a label.

The wrapping apparatus according to the above preferred embodiment further includes the label printer, so information such as the price of the product can be printed on the label.

According to another preferred embodiment of the present invention, a wrapping apparatus further includes a label application unit. The label application unit applies the label to the product.

The wrapping apparatus according to the above preferred embodiment further includes the label application unit, so the label on which information such as the price of the product has been printed can be applied to the product.

### ADVANTAGEOUS EFFECTS OF THE INVENTION

According to the present invention, workability can be improved.

### BRIEF DESCRIPTION OF THE DRAWINGS

FIG. 1 is a perspective view of a wrapping apparatus of an embodiment;
FIG. 2 is a block diagram of the wrapping apparatus of the embodiment;
FIG. 3 is a drawing showing an example of a label of the embodiment;
FIG. 4 is a flowchart showing the operation of the wrapping apparatus of the embodiment;
FIG. 5 is a drawing showing an example of a display unit of the embodiment;
FIG. 6 is a drawing showing an example of the display unit of the embodiment;
FIG. 7 is a drawing showing an example of the display unit of the embodiment;
FIG. 8 is a drawing showing an example of the display unit of the embodiment;
FIG. 9 is a flowchart showing the operation of a wrapping apparatus of an example modification;
FIG. 10 is a drawing showing an example of a display unit of the example modification;
FIG. 11 is a drawing showing an example of the display unit of the example modification; and
FIG. 12 is a drawing showing an example of a label of the example modification.

### DETAILED DESCRIPTION

An embodiment of the present invention will now be described with reference to the drawings.

### (1) Device Configuration of Wrapping Apparatus

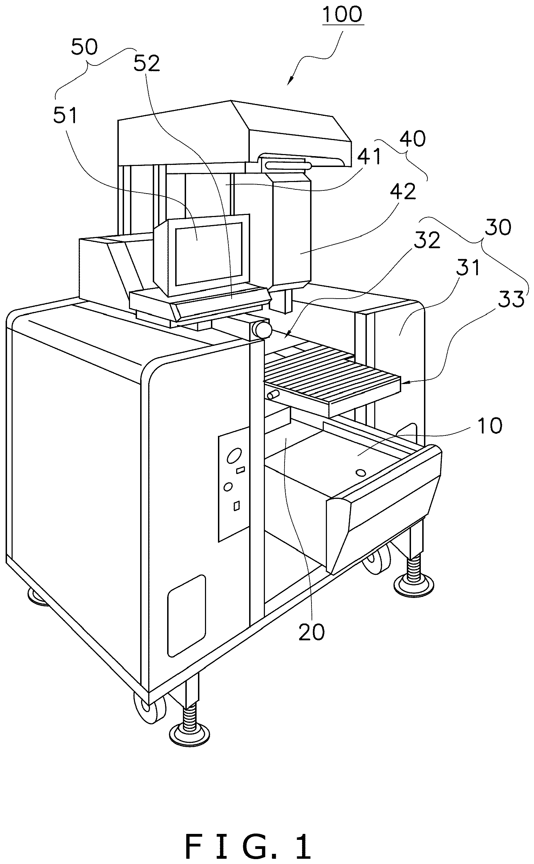

FIG. 1 is an exterior view of a wrapping apparatus 100 according to this embodiment. The wrapping apparatus 100 wraps a wrapping item in a film to make a product.

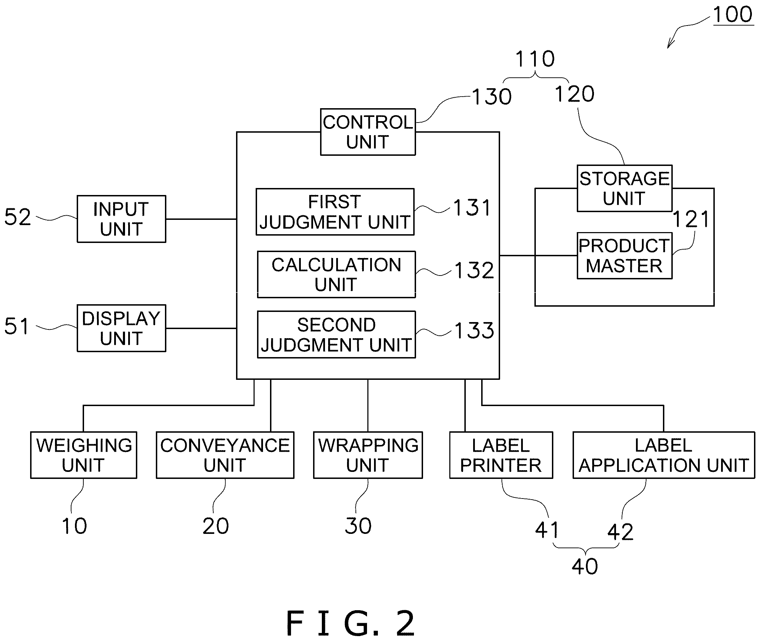

As shown in FIG. 1 and FIG. 2, the wrapping apparatus 100 mainly includes a weighing unit 10, a conveyance unit 20, a wrapping unit 30, a label issuing unit 40, and an operation unit 50.

The weighing unit 10 weighs the wrapping item. The wrapping item is, for example, a food put in a container such as a tray.

The conveyance unit 20 conveys the wrapping item from the weighing unit 10 to the wrapping unit 30. The conveyance unit 20 includes a conveyor and the like.

The wrapping unit 30 wraps in the film the wrapping item conveyed thereto from the weighing unit 10. The wrapping unit 30 mainly has a wrapping material retention unit 31, a folding mechanism 32, and a film sealing unit 33. The wrapping material retention unit 31 retains a film roll. The folding mechanism 32 folds the film paid out from the film roll under the bottom of the product to wrap the wrapping item in the film and sends the wrapping item that has been wrapped to the film sealing unit 33. The film sealing unit 33 heat-seals the film that has been folded under the bottom of the wrapping item.

The label issuing unit 40 has a label printer 41 and a label application unit 42. The label printer 41 prints product information on a label. The product information includes, for example, the weight of the wrapping item and the price of the product. The label application unit 42 applies the label to the wrapped product. Specifically, the label application unit 42 applies the label issued from the label printer 41 to the film in which the wrapping unit 30 has wrapped the product.

The operation unit 50 mainly has a display unit 51 and an input unit 52 to operate the wrapping apparatus 100.

The display unit 51 is a liquid crystal display and displays information relating to the wrapping apparatus 100. Specifically, the display unit 51 displays the operating state of the wrapping apparatus 100, information relating to the wrapping item wrapped by the wrapping apparatus 100, and screens for setting the wrapping apparatus 100. The display unit 51 may also be a touch panel.

The input unit 52 includes input keys and is used by a user for input. Specifically, the input unit 52 inputs instructions and settings with respect to the wrapping apparatus 100. The input unit 52 is not particularly limited as long as it can input a price condition, and in this embodiment the input unit 52 includes a numerical keypad.

### (2) Control Configuration of Wrapping Apparatus

FIG. 2 is a block diagram of the wrapping apparatus 100 of this embodiment. As shown in FIG. 2, the wrapping apparatus 100 has a control device 110 to control the operation of its constituent devices. The control device 110 is realized by a computer. The control device 110 includes a storage unit 120 and a control unit 130. For the control unit 130, a processor such as a central processing unit (CPU) or a graphics processing unit (GPU) can be used. The control unit 130 reads programs stored in the storage unit 120 and performs predetermined arithmetic processing in accordance with the programs. Moreover, the control unit 130 can write arithmetic results to the storage unit 120 and read information stored in the storage unit 120 in accordance with the programs.

The storage unit 120 and the control unit 130 will now be described below.

### (2-1) Storage Unit

The storage unit 120 stores various types of programs and various types of information necessary for control of the wrapping apparatus 100. The storage unit 120 has a product master 121.

The product master 121 stores product information about the product. The product information includes, for example, the product name, the product code, the unit price, the weight, and ingredients. Here, the product information includes information about whether or not the product is a product for which a price condition is set. The price condition is a price range when selling the product.

The product information about various types of products stored in the product master 121 may be acquired via a network from a server or may be acquired from other storage media. The product information about various types of products is updated as appropriate.

### (2-2) Control Unit

As shown in FIG. 2, the control unit 130 controls the weighing unit 10, the conveyance unit 20, the wrapping unit 30, the label printer 41, and the label application unit 42 in accordance with input from the input unit 52 and outputs various types of information to the display unit 51.

The control unit 130 switches the operation of the wrapping unit 30 depending on whether or not the product is a product for which the price condition is set. In a case where the control unit 130 judges that the product is a product for which the price condition is set, the control unit 130 calculates a price of the product based on the weighing result in the weighing unit 10, and when the calculated price meets the price condition the control unit 130 causes wrapping of the wrapping item by the wrapping unit 30 to be executed, and when the calculated price does not meet the price condition the control unit 130 does not cause wrapping of the wrapping item by the wrapping unit 30 to be executed.

Here, in the case of a product for which the price condition is set, the control unit 130 calculates the price of the product based on the weighing result in the weighing unit 10, and when the calculated price meets the price condition the control unit 130 operates the conveyance unit 20, and when the calculated price does not meet the price condition the control unit 130 does not operate the conveyance unit 20.

The control unit 130 has a first operating mode and a second operating mode. The first operating mode is a mode where, in the case of a product for which the price condition is not set, if the weighing value in the weighing unit 10 is stable the control unit 130 wraps in the wrapping unit 30 the wrapping item loaded on the weighing unit 10. The second operating mode is a mode where, in the case of a product for which the price condition is set, the control unit 130 calculates a selling price of the wrapping item based on the weight of the wrapping item when the weighing value in the weighing unit 10 is stable and the price per unit weight and, if the selling price it has calculated meets the price condition, wraps in the wrapping unit 30 the wrapping item loaded on the weighing unit 10.

Here, the control unit 130 operates the conveyance unit 20 to convey the wrapping item from the weighing unit 10 to the wrapping unit 30 if in the first operating mode the weighing value is stable and if in the second operating mode the calculated price when the weighing value is stable meets the price condition.

In this embodiment, the control unit 130 has a first judgment unit 131, a calculation unit 132, and a second judgment unit 133.

The first judgment unit 131 judges whether or not the product is a product for which the price condition is set. The price condition in this case is a price range acceptable to consumers as a selling price. The first judgment unit 131 judges based on information acquired from, for example, the input unit 52 and the product master 121.

Specifically, the first judgment unit 131 judges that the product is a product for which the price condition is set in a case where the price condition has been input from the input unit. That is, the first judgment unit 131 judges that the product is a product for which the price condition is set when the price condition is input from the input unit.

Furthermore, the first judgment unit 131 judges that the product is a product for which the price condition is set in a case where the price condition is included in the product information called up from the product master 121. More specifically, when a product call number (Call No.) is input from the input unit 52, the first judgment unit 131 calls up the product information about the product corresponding to the call number from the product master 121 of the storage unit 120 and acquires the product information. The first judgment unit 131 judges that the product is a product for which the price condition is set if the price condition is set in that product information. The first judgment unit 131 judges that the product is a product for which the price condition is not set if the price condition is not set in the product information it has acquired.

The first judgment unit 131 sets the first operating mode when it judges that the wrapping item loaded on the weighing unit 10 is a product for which the price condition is not set. The first judgment unit 131 sets the second operating mode when it judges that the wrapping item loaded on the weighing unit 10 is a product for which the price condition is set.

The calculation unit 132 calculates the price of the product based on the weighing result in the weighing unit 10 in a case where the first judgment unit 131 judges that the product is a product for which the price condition is set. More specifically, in the second operating mode, the calculation unit 132 calculates the price of the product by multiplying the price per unit weight (unit price) in the product information called up from the product master 121 by the weight of the wrapping item measured by the weighing unit 10. It will be noted that the calculation unit 132 calculates the "weight of the wrapping item" in this case as a net weight of the wrapping item obtained by subtracting the tare weight from the weighing value when the weighing value in the weighing unit 10 is stable.

The second judgment unit 133 causes wrapping of the wrapping item by the wrapping unit 30 to be executed in a case where the price calculated by the calculation unit 132 meets the price condition and does not cause wrapping of the wrapping item by the wrapping unit 30 to be executed in a case where the price calculated by the calculation unit 132 does not meet the price condition.

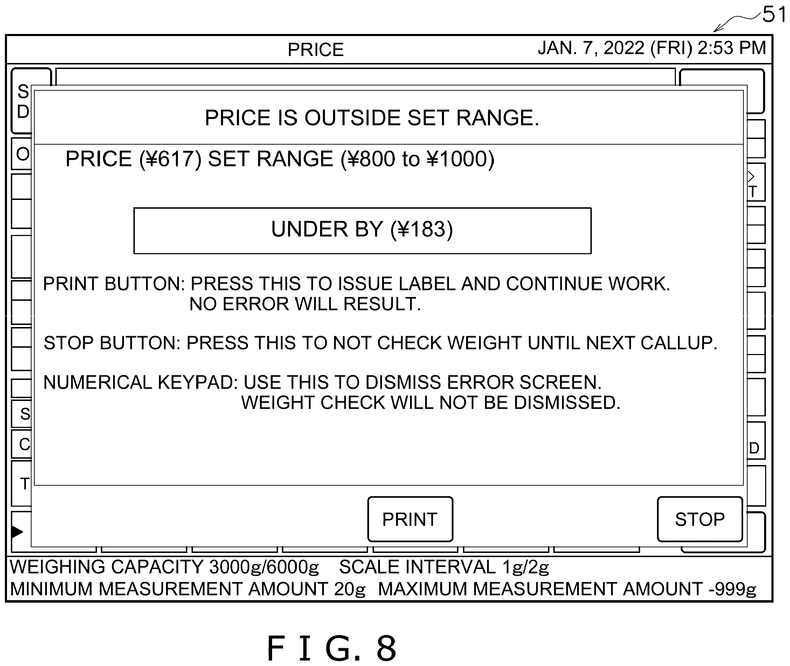

More specifically, in the second operating mode, the second judgment unit 133 judges whether or not the price calculated by the calculation unit 132 meets the price condition by comparing the price condition calculated from the calculation unit 132 with the price condition included in the product information called up from the product master 121 or the price condition input by the input unit 52. In a case where the second judgment unit 133 judges that the price calculated by the calculation unit 132 meets the price condition, the second judgment unit 133 operates the conveyance unit 20 to convey the wrapping item from the weighing unit 10 to the wrapping unit 30 and operates the wrapping unit 30 to execute wrapping of the wrapping item. In a case where the second judgment unit 133 judges that the price calculated by the calculation unit 132 does not meet the price condition, the second judgment unit 133 does not operate the conveyance unit 20 and the wrapping unit 30 and does not execute wrapping of the wrapping item. Here, in a case where the second judgment unit 133 judges that the price calculated by the calculation unit 132 does not meet the price condition, the second judgment unit 133 causes the display unit 51 to display an indication thereof (see FIG. 8).

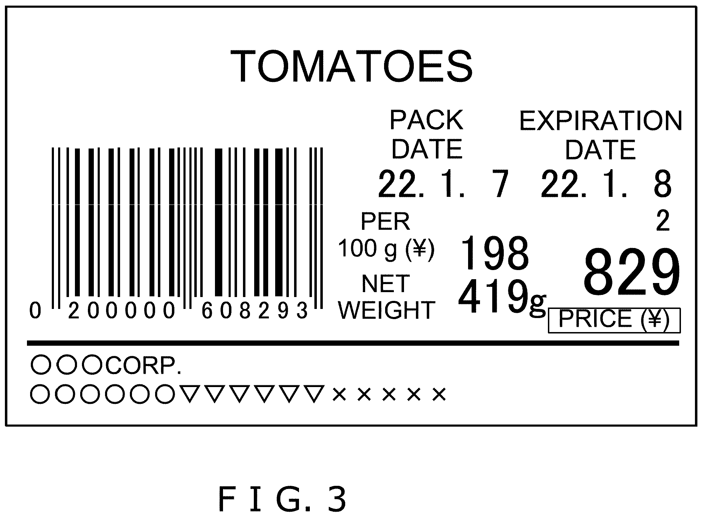

FIG. 3 shows an example of a label issued by the wrapping apparatus 100. In a case where the second judgment unit 133 judges that the price calculated by the calculation unit 132 meets the price condition, the second judgment unit 133 causes the label printer 41 to print a label such as shown in FIG. 3. More specifically, the second judgment unit 133 sends the price (¥829), obtained by multiplying the net weight (419 g) by the unit price (¥198) called up from the product master 121, and other product information to the label printer 41 and causes the label printer 41 to generate and print a label.

Furthermore, when the second judgment unit 133 causes the label printer 41 to print the label, the second judgment unit 133 causes the label application unit 42 to apply the label. More specifically, the second judgment unit 133 instructs the label application unit 42 to apply the label printed by the label printer 41 to the product.

### (3) Operation of Wrapping Apparatus

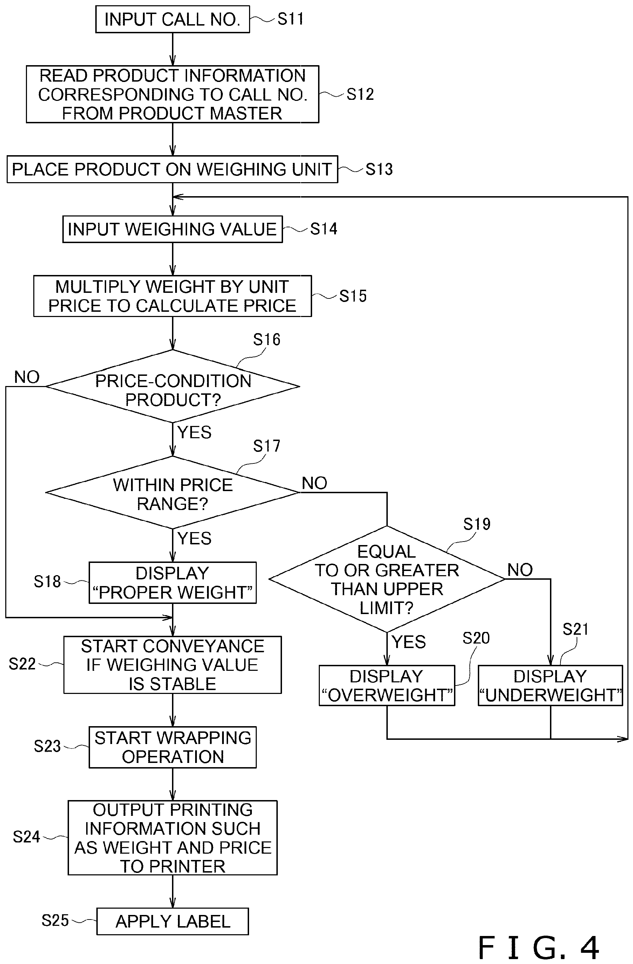

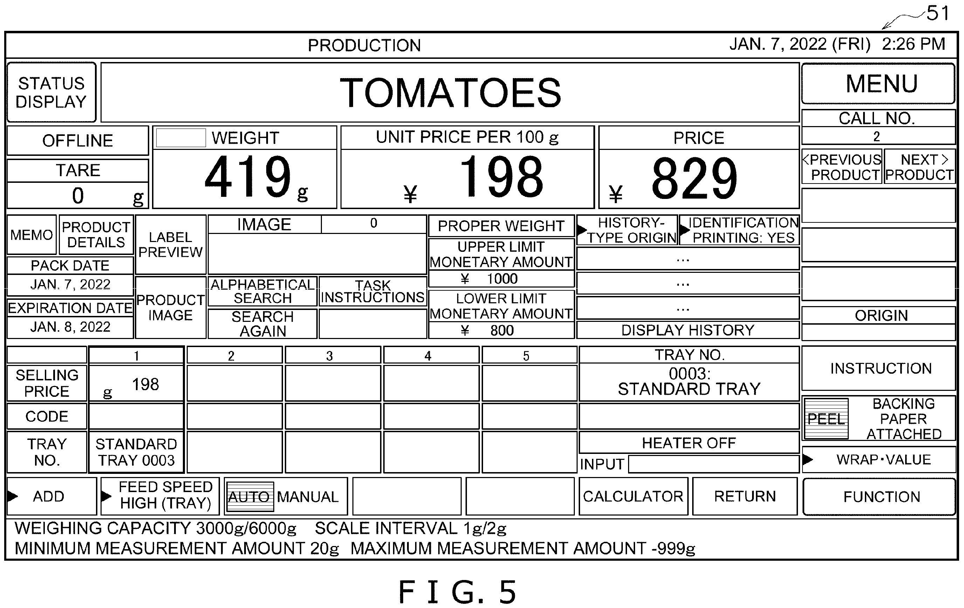

FIG. 4 is a flowchart showing the operation of the wrapping apparatus 100 of this embodiment. FIG. 5 to FIG. 8 show screens displayed by the display unit 51. The operation of the wrapping apparatus 100 of this embodiment will now be described with reference to FIG. 1 to FIG. 8. The making of the product by wrapping the wrapping item in the film in the wrapping apparatus 100 is performed by the control device 110 controlling the operation of various types of devices.

As shown in FIG. 4, first, the user inputs the call number of the product to the input unit 52 (step S11). In step S11 the user selects the product by inputting the call number. In this embodiment, the user selects "tomatoes" by inputting "2" as the call number. When the call number is input in step S11, the control unit 130 moves to step S12.

It will be noted that in step 11, instead of the product being called up by the user inputting the call number to the input unit 52, the display unit 51 may display a product list and the product may be called up by the user designating the corresponding product name from the list.

In step S12 the control unit 130 calls up from the product master 121 the product information corresponding to the product with the call number that was input in step S11. In this embodiment, the control unit 130 reads from the product master 121 the product information whose call number corresponds to "2." Specifically, the first judgment unit 131 of the control unit 130 calls up from the product master 121 the product name, the unit price, and the price condition, for example, as the product information. Thereafter, the control unit 130 proceeds to step S13.

In step S13 the user loads the product with the call number selected in step S11 on the weighing unit 10. The weighing unit 10 measures the weight of the wrapping item that has been loaded. In this embodiment, the user places tomatoes in a tray on the weighing unit 10. The weighing unit 10 measures the weight of the tomatoes that are the wrapping item loaded on the weighing unit 10. Thereafter, the control unit 130 proceeds to step S14.

In step S14 the weighing unit 10 inputs the weighing value of the wrapping item to the control unit 130. The control unit 130 finds the net weight of the tomatoes by subtracting, from the input weighing value, the tare weight called up from the product master 121 and causes the display unit 51 to display the found net weight. Thereafter, the control unit 130 proceeds to step S15.

In step S15 the control unit 130 calculates the selling price of the wrapping item based on the found net weight and the unit price. In this embodiment, the calculation unit 132 of the control unit 130 calculates the selling price by acquiring the unit price from the product master 121 and multiplying the acquired unit price by the net weight. Thereafter, the control unit proceeds to step S16.

In step S16 the control unit 130 judges whether or not the weighed wrapping item is a product for which the price condition is set (a price-condition product). In this embodiment, the control unit 130 judges that the product is a product for which the price condition is set in a case where the price condition has been input from the input unit 52. Furthermore, in addition to or instead of this, the control unit 130 judges that the product is a product for which the price condition is set in a case where the price condition is included in the product information called up from the product master 121. It will be noted that in a case where the input of the price condition from the input unit 51 and the price condition called up from the product master 121 are different, the control unit 130 prioritizes either one.

Specifically, for example, the user touches an upper limit monetary amount or a lower limit monetary amount on the display unit 51 and thereafter inputs a numerical value using the numerical keypad serving as the input unit 52. In a case where at least one of an upper limit monetary amount and a lower limit monetary amount has been input by the input unit 52, the control unit 130 judges that the product is a product for which the price condition is set. Furthermore, the control unit 130 judges that the product is not a product for which the price condition is set in a case where ¥0 is displayed for the upper limit monetary amount and the lower limit monetary amount. It will be noted that in an initial state ¥0 is set as default values for the upper limit monetary amount and the lower limit monetary amount.

In this embodiment, as shown in FIG. 5 to FIG. 7, an upper limit monetary amount (¥1,000 in FIG. 5 to FIG. 7) and a lower limit monetary amount (¥800 in FIG. 5 to FIG. 7) are set as the price condition.

It will be noted that when the price condition is input to the input unit 52, the control unit 130 may also cause the display unit 51 to display a screen asking the user whether or not to further add a weight condition.

When the control unit 130 judges in step S16 that the product is a product for which the set price condition is set, the control unit 130 proceeds to step S17. When the control unit 130 judges in step S16 that the product is not a product for which the price condition is set, the control unit 130 switches to the first operating mode and proceeds to step S22.

In step S17 the control unit 130 judges whether or not the price calculated in step S15 meets the price condition. More specifically, the second judgment unit 133 of the control unit 130 judges whether or not the price calculated by the calculation unit meets at least one of the price condition input by the input unit 52 and the price condition called up from the product master 121.

When the control unit 130 judges in step S17 that the price calculated by the calculation unit meets the price condition, the control unit 130 switches to the second operating mode and proceeds to step S18. When the control unit 130 judges in step S17 that the price calculated by the calculation unit does not meet the price condition, the control unit 130 proceeds to step S19.

When the control unit 130 judges in step S18 that the price calculated by the calculation unit meets the price condition, it causes the display unit 51 to display "proper weight" as shown in FIG. 5.

In step S19 the control unit 130 judges whether or not the price calculated in step S15 is equal to or greater than the upper limit monetary amount of the price condition. In this embodiment, the second judgment unit 133 of the control unit 130 judges whether or not the price calculated in step S15 is equal to or greater than ¥1,000 which is the upper limit monetary amount.

When the control unit 130 judges in step S19 that the price calculated in step S15 is equal to or greater than the upper limit monetary amount, the control unit 130 proceeds to step S20. When the control unit 130 judges in step S19 that the price calculated in step S15 is less than the upper limit monetary amount, it proceeds to step S21. In this case, the price calculated in step S15 equal to or less than the lower limit monetary amount because it does not meet the price condition and it is not equal to or greater than the upper limit monetary amount.

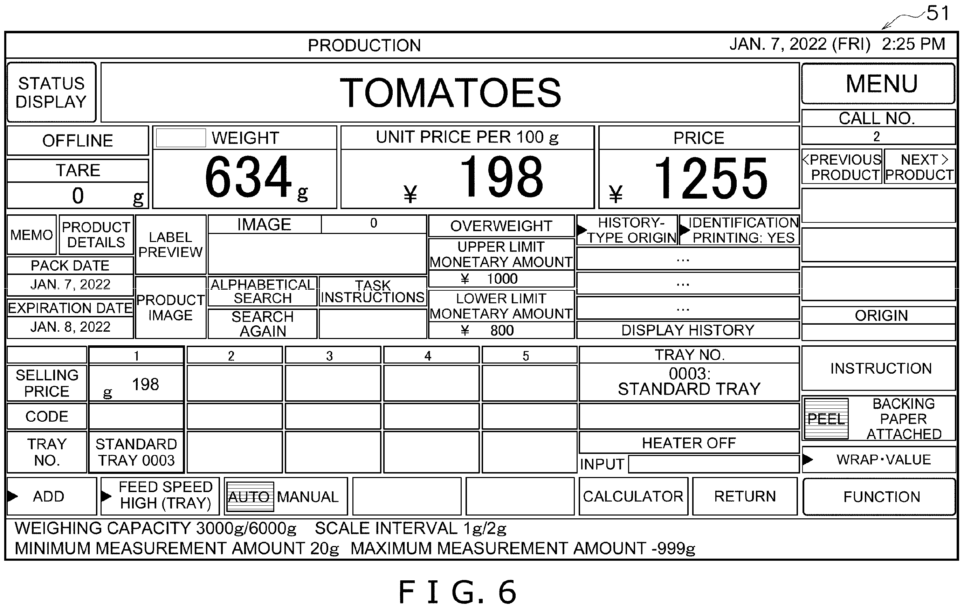

In step S20 the control unit 130 causes the display unit 51 to display "overweight" as shown in FIG. 6 because the price calculated in step S15 (¥1,255 in FIG. 6) is equal to or greater than the upper limit monetary amount. The user recognizing that the product is overweight decreases the wrapping item loaded on the weighing unit 10. Then, the weighing unit 10 returns to step S14 and reinputs the weighing value.

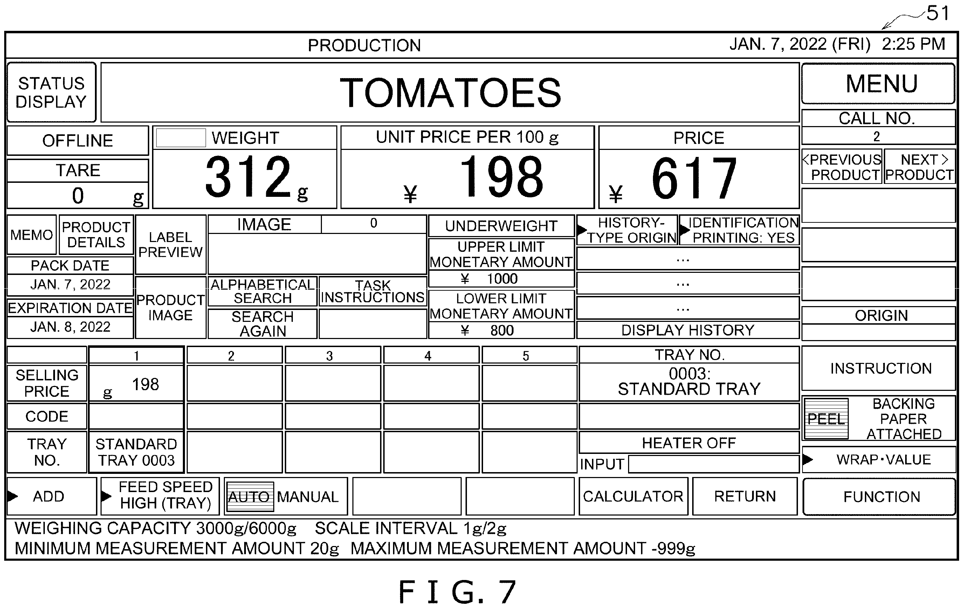

In step S21 the control unit 130 causes the display unit 51 to display "underweight" as shown in FIG. 7 because the price calculated in step S15 (¥617 in FIG. 7) is equal to or less than the lower limit monetary amount. The user recognizing that the product is underweight increases the wrapping item loaded on the weighing unit 10. Then, the weighing unit 10 returns to step S14 and reinputs the weighing value.

It will be noted that in steps S20 and S21 the control unit 130 causes the display unit 51 to display that the calculated price does not meet the price condition. For example, FIG. 8 shows an example of a screen the control unit 130 causes the display unit 51 to display in a case where the calculated price is equal to or less than the lower limit monetary amount of the price condition in step S21.

In step S22 the control unit 130 operates the conveyance unit 20 if the weighing value in the weighing unit 10 is stable. More specifically, in the case of a product for which the price condition is not set in step S16, if the weighing value in the weighing unit 10 is stable the conveyance unit 20 conveys to the wrapping unit 30 the wrapping item loaded on the weighing unit 10. In the case of a product for which the price condition is set in step S16, if the selling price calculated in step S15 meets the price condition in step S17 and the weighing value in the weighing unit 10 is stable in step S22, the conveyance unit 20 conveys to the wrapping unit 30 the wrapping item loaded on the weighing unit 10. Thereafter, the control unit 130 proceeds to step S23.

In step S23 the control unit 130 causes the wrapping unit 30 to wrap the wrapping item conveyed by the conveyance unit 20. Specifically, the wrapping unit 30 covers the top of the wrapping item with the film and then folds the peripheral edge portions of the film under the bottom of the tray to wrap the wrapping item. In this embodiment, the tomatoes resting in the tray are wrapped in the film to make a product. Thereafter, the control unit 130 proceeds to step S24.

In step S24, in the case of a product for which the price condition is set, the control unit 130 outputs to the label printer 41 printing information in which other product information has been added to the price calculated based on the net weight when the weighing value was judged to be stable in step S22 and the unit price. The label printer 41 prints product information on a label based on these items of printing information. In this embodiment, the label printer 41 prints a label on which, as shown in FIG. 3, the product name, the product price, the weight (net weight) of the wrapping item, the unit price, the pack date, and the expiration date are recorded as the product information. Thereafter, the control unit 130 proceeds to step S25.

In the case of a product for which the price condition is not set, such as, for example, in the case of a fixed-price product in which a fixed monetary amount is set as the selling monetary amount, if the weighing value input in step S14 is stable the control unit 130 outputs to the label printer 41 printing information in which other product information has been added to the fixed monetary amount read from the product master 121. The label printer 41 prints the product information on a label based on these items of printing information.

In step S25 the control unit 130 causes the label application unit 42 to apply the label to the product. In this embodiment, the label application unit 42 applies the label shown in FIG. 3 to the film on the product.

It will be noted that the wrapping apparatus 100 has an automatic mode and a manual mode. In a case where the wrapping apparatus 100 is set to the automatic mode, if the price condition (step S17) and the stable weighing value condition (step S22) are met, the control unit 130 causes the conveyance unit 20 to convey the wrapping item on the weighing unit 10 and directly causes the wrapping unit 30 to start the wrapping operation (step S23). In a case where the wrapping apparatus 100 is set to the manual mode, if the price condition (step S17) and the stable weighing value condition (step S22) are met, the user operates a start key or a print key, whereby the control unit 130 causes the conveyance unit 20 to convey the wrapping item on the weighing unit 10 to the wrapping unit 30 and causes the wrapping unit 30 to start the wrapping operation.

### (4) Characteristics

(4-1)
The wrapping apparatus 100 according to this embodiment wraps a wrapping item in a film to make a product and includes the weighing unit 10, the wrapping unit 30, and the control unit 130. The weighing unit 10 weighs the wrapping item. The wrapping unit 30 wraps the wrapping item in the film. The control unit 130 switches the operation of the wrapping unit 30 depending on whether or not the product is a product for which a price condition is set. In a case where the control unit 130 judges that the product is a product for which the price condition is set, the control unit 130 calculates a price of the product based on the weighing result in the weighing unit 10, and when the calculated price meets the price condition the control unit 130 causes wrapping of the wrapping item by the wrapping unit 30 to be executed, and when the calculated price does not meet the price condition the control unit 130 does not cause wrapping of the wrapping item by the wrapping unit 30 to be executed.

Here, the control unit 130 first judges whether or not the product is a product for which the price condition is set, and in a case where the product is a product for which the price condition is set, the control unit 130 calculates the price of the product from the weighing result in the weighing unit 10, and when the price meets the price condition the control unit 130 causes the wrapping unit 30 to execute wrapping, and when the price does not meet the price condition the control unit 130 does not cause the wrapping unit 30 to execute wrapping. For this reason, it is not necessary for the user to set in advance a weight range in the wrapping apparatus by dividing the target price by the unit price, so workability in the case of wrapping a wrapping item under a target price condition can be improved.

In this way, the wrapping apparatus 100 of this embodiment can set a price condition, so particularly time and effort to wrap a wrapping item whose unit price fluctuates can be saved. For this reason, the wrapping apparatus 100 of this embodiment is suitably used to wrap perishable foods such as fruits and vegetables whose purchase price fluctuates daily.

It will be noted that the control unit 130 switches the operation of the wrapping unit 30 depending on whether or not the product is a product for which the price condition is set, so the wrapping apparatus 100 of this embodiment can make a product for which the price condition is set (a price-condition product) and a product for which the price condition is not set.

Moreover, the wrapping apparatus 100 of this embodiment can convey to and wrap in the wrapping unit 30 the wrapping item loaded on the weighing unit 10 in accordance with the set price condition, so it can meet the needs of the user.

Moreover, the wrapping apparatus 100 of this embodiment does not make a product outside the range of the set price condition, so erroneous production by the user can also be inhibited.

(4-2)
In the wrapping apparatus 100 according to this embodiment, the control unit 130 has the first operating mode and the second operating mode. The first operating mode is a mode where, in the case of a product for which the price condition is not set, if the weighing value in the weighing unit 10 is stable the control unit 130 wraps in the wrapping unit 130 the wrapping item loaded on the weighing unit 10. The second operating mode is a mode where, in the case of a product for which the price condition is set, the control unit 130 calculates a selling price of the wrapping item based on the weight of the wrapping item when the weighing value in the weighing unit 10 is stable and the price per unit weight and, if the calculated selling price meets the price condition, wraps in the wrapping unit 30 the wrapping item loaded on the weighing unit 10.

Here, the wrapping operation is not executed in a case where the price condition is not met even if the weighing value of the wrapping item loaded on the weighing unit 10 is stable, so the amount of the wrapping item can be increased or decreased on the weighing unit 10. Then, if the price condition is met as a result of increasing or decreasing the amount of the wrapping item, the wrapping operation can be started.

It will be noted that the wrapping apparatus 100 according to this embodiment further includes the conveyance unit 20 that conveys the product from the weighing unit 10 to the wrapping unit 30, and in the first operating mode the control unit 130 operates the conveyance unit 20 to convey the wrapping item from the weighing unit 10 to the wrapping unit 30 in a case where the weighing value in the weighing unit 10 is stable, and in the second operating mode the control unit 130 operates the conveyance unit 20 to convey the wrapping item from the weighing unit 10 to the wrapping unit 30 in a case where the calculated price when the weighing value in the weighing unit 10 is stable meets the price condition.

(4-3)
The wrapping apparatus 100 according to this embodiment further includes the input unit 52. The input unit 52 inputs the price condition. The control unit 130 judges that the product is a product for which the price condition is set in a case where the price condition has been input from the input unit 52. That is, the control unit 130 judges that the product is a product for which the price condition is set when the price condition is input to the input unit 52.

Here, the user can input the price condition from the input unit 52, so in a case where the user wants to wrap a product in a target price bracket, the wrapping item can be made to stand by on the weighing unit 10 to allow the user to increase or decrease the amount of the wrapping item until the price condition input from the input unit 52 is met. Consequently, the wrapping apparatus 100 with improved working efficiency can be easily realized.

(4-4)
The wrapping apparatus 100 according to this embodiment further includes the product master 121. The product master 121 stores product information about the product. The control unit 130 judges that the product is a product for which the price condition is set in a case where the price condition is included in the product information called up from the product master 121.

Here, the price condition can be registered beforehand in the product master 121, so by simply calling up the product information from the product master 121 the control unit 130 can judge whether or not the product is a product for which the price condition is set.

(4-5)
In the wrapping apparatus 100 according to this embodiment, the price condition is a price range when selling the product. Here, a price bracket affordable to consumers can be set as the price condition, so the wrapping apparatus 100 that can contribute to sales can be realized.

(4-6)
The wrapping apparatus 100 according to this embodiment further includes the label printer 41. The label printer 41 prints information about the product on a label. Because of the label printer 41, information such as the price of the product can be printed on the label.

(4-7)
The wrapping apparatus 100 of this embodiment further includes the label application unit 42. The label application unit 42 applies the label to the product. Because of the label application unit 42, the label on which information such as the price of the product has been printed can be applied to the product.

### (5) Example Modifications

Example modifications of the above embodiment will be described below. It will be noted that some or all of the content of each example modification may be combined with the content of the above embodiment and/or the content of another example modification to the extent that they are not mutually contradictory.

### (5-1) Example Modification A

### (5-1-1) Overall Configuration

In the above embodiment, the control unit 130 has the first operating mode in which it wraps a product for which the price condition is not set and the second operating mode in which it wraps a product for which the price condition is set, but the control unit 130 is not limited to this. A wrapping apparatus of this example modification basically has the same configuration as the wrapping apparatus 100 of the above embodiment but it can further set a weight condition.

### (5-1-2) Control Configuration

The control unit 130 of this example modification has a third operating mode. The third operating mode is a mode where, in the case of a product for which the price condition and a weight condition are set, the control unit 130 calculates a selling price of the wrapping item based on the weight of the wrapping item when the weighing value in the weighing unit 10 is stable and the price per unit weight and, if the selling price it has calculated meets the price condition and the weight of the wrapping item when the weighing value in the weighing unit 10 is stable meets the weight condition, wraps in the wrapping unit the wrapping item loaded on the weighing unit 10.

Specifically, in a case where the control unit 130 judges that the product is a product for which the price condition is set and judges that the product is not a product for which the weight condition is set, the control unit 130 causes wrapping of the wrapping item by the wrapping unit 30 to be executed in a case where the price condition is met and does not cause wrapping of the wrapping item by the wrapping unit 30 to be executed in a case where the price condition is not met. Furthermore, in a case where the control unit 130 judges that the product is a product for which the price condition is set and judges that the product is a product for which the weight condition is set, the control unit 130 causes wrapping of the wrapping item by the wrapping unit 30 to be executed in a case where the price condition and the weight condition are met and does not cause wrapping of the wrapping item by the wrapping unit 30 to be executed in a case where at least one of the price condition and the weight condition is not met. Furthermore, in a case where the control unit 130 judges that the product is not a product for which the price condition is set and judges that the product is a product for which the weight condition is set, the control unit 130 causes wrapping of the wrapping item by the wrapping unit 30 to be executed in a case where the weight condition is met and does not cause wrapping of the wrapping item by the wrapping unit 30 to be executed in a case where the weight condition is not met. Furthermore, in a case where the control unit 130 judges that the product is not a product for which the price condition is set and judges that the product is not a product for which the weight condition is, the control unit 130 causes weighing of the wrapping item by the weighing unit 10 to be executed and causes wrapping of the wrapping item by the wrapping unit 30 to be executed.

Furthermore, the product information stored in the product master 121 of this example modification further includes information about whether or not the product is a product for which the weight condition is set.

### (5-1-3) Operation

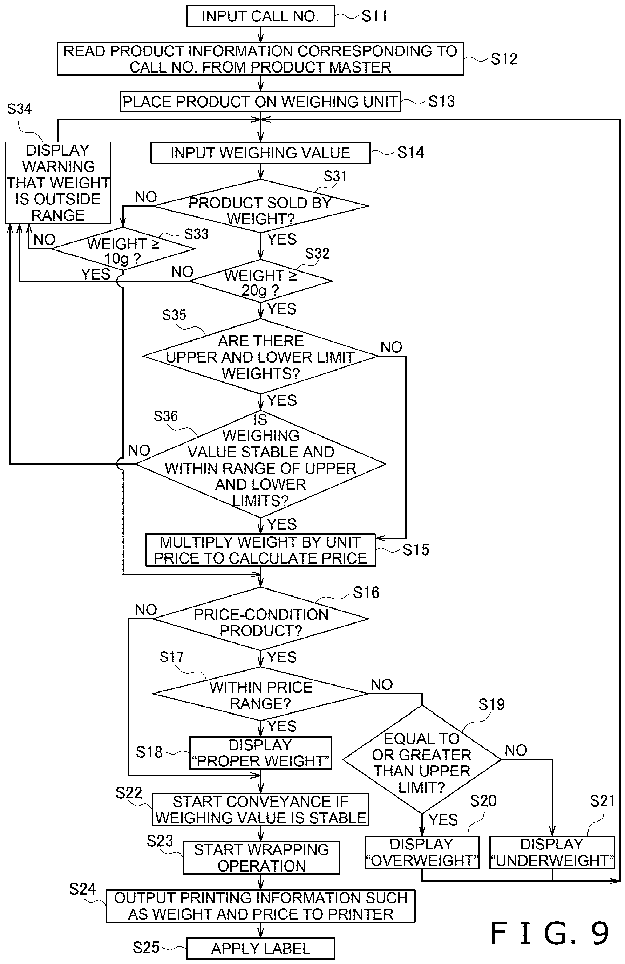

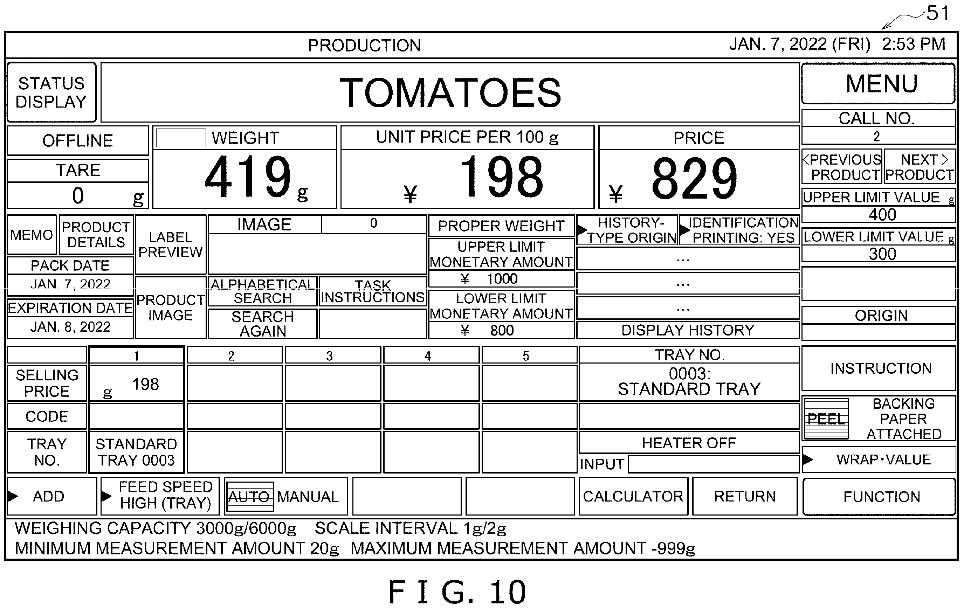

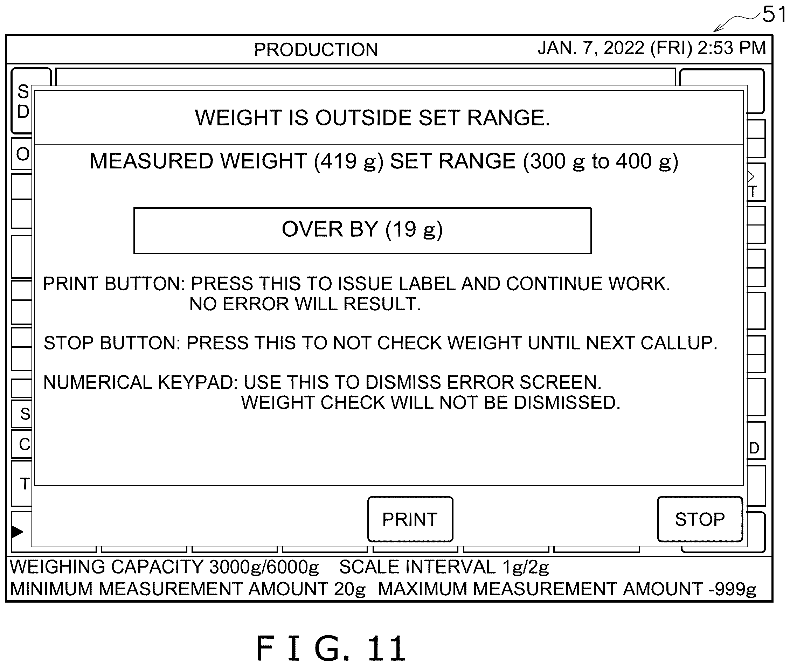

FIG. 9 is a flowchart showing the operation of the wrapping apparatus of this example modification. FIG. 10 and FIG. 11 show screens displayed by the display unit 51. The operation of the wrapping apparatus of this example modification will now be described with reference to FIG. 1 to FIG. 3 and FIG. 5 to FIG. 11.

As shown in FIG. 9, as in the above embodiment, first, the user inputs the call number of the product to the input unit 52 (step S11). Next, the control unit 130 calls up from the product master 121 the product information corresponding to the product with the call number selected in step S11 (step S12). Next, the user loads the wrapping item on the weighing unit 10 (step S13). Next, the weighing unit 10 inputs the weighing value of the wrapping item and outputs it to the control unit 130 (step S14). Thereafter, the control unit 130 proceeds to step S31.

In step S31 the control unit 130 judges whether or not the weighed wrapping item is a product sold by weight. A product sold by weight is a product whose price is calculated based on the weighing result in the weighing unit 10.

In this example modification, the control unit 130 judges that the product is a product sold by weight in a case where the weight condition has been input from the input unit 52. Furthermore, in addition to or instead of this, the control unit 130 judges that the product is a product sold by weight in a case where the weight condition is included in the product information called up from the product master 121.

When the control unit 130 judges in step S31 that the product is a product sold by weight, the control unit 130 proceeds to step S32. When the control unit 130 judges in step S31 that the product is not a product sold by weight, the control unit 130 judges that the product is a fixed-price product and proceeds to step S33. A fixed-price product is a product whose price is fixed regardless of the weighing result in the weighing unit 10.

In step S33 the control unit 130 judges whether or not the weight of the wrapping item input from the weighing unit 10 to the control unit 130 is equal to or greater than a second weight value ("10 g" in FIG. 9). In a case where the weight of the wrapping item of the fixed-price product is equal to or greater than the second weight value, the control unit 130 proceeds to step S16. In a case where the weight value of the wrapping item of the fixed-price product is not equal to or greater than the second weight value, the control unit 130 proceeds to step S34.

In step S34 the control unit 130 causes the display unit 51 to display that the weight of the wrapping item is not equal to or greater than the second weight value. The user recognizing that the weight of the wrapping item is not equal to or greater than the second weight value increases the wrapping item loaded on the weighing unit 10. Then, the weighing unit 10 returns to step S14 and reinputs the weighing value.

In step S32 the control unit 130 judges whether or not the weight of the wrapping item input from the weighing unit 10 to the control unit 130 is equal to or greater than a first weight value ("20 g" in FIG. 10). Here, the first weight value is a minimum measurement amount decided by the accuracy class of the weighing unit 10. The minimum measurement amount decided by the accuracy class of the weighing unit 10 is a minimum weight needed for printing in regard to a product sold by weight. It will be noted that classifications of accuracy classes for weighing are defined by the Japanese Industrial Standards. The first weight value of this example modification is 20 g. The first weight value is larger than the second weight value.

In a case where the weight of the wrapping item of the product sold by weight is equal to or greater than the first weight value in step S32, the control unit 130 proceeds to step S35. In a case where the weight of the wrapping item of the product sold by weight is not equal to or greater than the first weight value, the control unit 130 proceeds to step S34.

In step S34 the control unit 130 causes the display 51 to display that the weight of the wrapping item is not equal to or greater than the first weight value. The user recognizing that the weight of the wrapping item is not equal to or greater than the first weight value increases the wrapping item loaded on the weighing unit 10. Then, the weighing unit 10 returns to step S14 and reinputs the weighing value.

In step S35 the control unit 130 judges whether or not the weighed wrapping item is a product for which the weight condition is set. In this example modification, the control unit 130 judges that the product is a product for which the weight condition is set in a case where the weight condition has been input from the input unit 52. Furthermore, in addition to or instead of this, the control unit 130 judges that the product is a product for which the weight condition is set in a case where the weight condition is included in the product information called up from the product master 121.

Specifically, for example, the user touches and designates an upper limit weight field or a lower limit weight field on the display unit 51 and thereafter uses the numerical keypad serving as the input unit 52 to input a numerical value. Then, the control unit 130 registers, as the input value of the upper limit weight field or the lower limit weight field that has been designated, the numerical value that has been input. The control unit 130 judges that the product is a product for which the weight condition is set in a case where at least one of an upper limit weight and a lower limit weight has been input by the input unit 52. Furthermore, the control unit 130 judges that the product is not a product for which the weight condition is set in a case where 0 g is displayed for the upper limit weight and the lower limit weight. It will be noted that in an initial state 0 g is set as a default value for the upper limit weight and the lower limit weight.

In step S35 the control unit 130 judges whether or not the weight condition is set. In this example modification, as shown in FIG. 10, an upper limit weight ("400 g in FIG. 10) and a lower limit weight ("300 g" in FIG. 10) are set as the weight condition.

When the control unit 130 judges in step S35 that the product is a product for which the weight condition is set, the control unit 130 proceeds to step S36. When the control unit 130 judges in step S35 that the product is not a product for which the weight condition is set, the control unit 130 proceeds to step S15.

In step S36 the control unit 130 finds the net weight by subtracting the tare weight registered in the product master 121 from the weighing value in the weighing unit 10 and judges whether or not the weight of the wrapping item when the net weight thereof is stable meets the weight condition. More specifically, the control unit 130 judges whether or not at least one of the weight condition input by the input unit 52 and the weight condition called up from the product master 121 is met.

When the control unit 130 judges in step S36 that the weight condition is met, the control unit 130 proceeds to step S15. When the control unit 130 judges in step S36 that the weight condition is not met, the control unit 130 proceeds to step S34.

In step S34 the control unit 130 causes the display unit 51 to display that the net weight calculated based on the weighing value in the weighing unit 10 in step S14 is outside the weight condition. For example, the control unit 130 causes the display unit 51 to display "underweight" when it judges that the net weight is equal to or lower than the lower limit weight and causes the display unit 51 to display "overweight" when it judges that the net weight is equal to or greater than the upper limit weight (not shown in the drawings). Furthermore, the control unit 130 may also cause the display unit 51 to display a warning screen as shown in FIG. 11. The user recognizing that the net weight is outside the weight range increases or decreases the wrapping item loaded on the weighing unit 10. Then, the weighing unit 10 returns to step S14 and reinputs the weighing value.

Processes from step S15 on are implemented in the same way as in the above embodiment. Specifically, the control unit 130 calculates the selling price of the wrapping item based on the net weight of the wrapping item measured by the weighing unit 10 and the unit price (step S15). Next, the control unit 130 judges whether or not the weighed wrapping item is a product for which the price condition is set (step S16).

When the control unit 130 judges in step S16 that the product is a product for which the price condition is set, the control unit 130 judges whether or not the price calculated in step S15 meets the price condition (step S17). When the control unit 130 judges in step S16 that the product is not a product for which the price condition is set, the control unit 130 proceeds to step S22.

When the control unit 130 judges in step S17 that the product meets the price condition, the control unit 130 causes the display unit 51 to display "proper weight" as shown in FIG. 5 (step S18) and proceeds to step S22. When the control unit 130 judges in step S17 that the product does not meet the price condition, the control unit 130 proceeds to step S19 and causes the display unit 51 to display "overweight" (step S20) as shown in FIG. 6 or causes the display unit 51 to display "underweight" (step S21) as shown in FIG. 7 and returns to step S14.

In step S22 the control unit 130 operates the conveyance unit 20 if the net weight calculated based on the weighing value in the weighing unit 10 is stable. Next, the control unit 130 causes the wrapping unit 30 to wrap the wrapping item conveyed by the conveyance unit 20 (step S23). Next, in the same way as mentioned above, the control unit 130 outputs to the label printer 41 information about the product sold by weight comprising the calculated selling price, weight, and other product information or information about the fixed-price product comprising the fixed price called up from the product master 121 and other product information. The label printer 41 prints these items of information on a label (step S24). Next, the control unit 130 causes the label application unit 42 to apply the label to the product (step S25).

### (5-1-4) Characteristics

(5-1-4-1)
In the wrapping apparatus according to this example modification, the control unit 130 has a third operating mode. The third operating mode is a mode where, in the case of a product for which the price condition and a weight condition are set (a product for which the judgments in step S35 and step S17 are Yes), the control unit 130 calculates a selling price of the wrapping item based on the weight of the wrapping item when the weighing value in the weighing unit 10 is stable and the price per unit weight and, if the selling price it has calculated meets the price condition and the weight of the wrapping item when the weighing value in the weighing unit meets the weight condition, wraps in the wrapping unit the wrapping item loaded on the weighing unit.

Here, the wrapping operation is not executed in a case where the price condition and the weight condition are not met even if the wrapping item loaded on the weighing unit 10 is stable, so the amount of the wrapping item can be increased or decreased on the weighing unit 10. Then, if the price condition and the weight condition are met as a result of increasing or decreasing the amount of the wrapping item, the wrapping operation can be started.

Furthermore, the wrapping apparatus of this example modification can make a product for which the price condition is set (a price-condition product), a product that is sold by weight and for which the weight condition is set, and a product sold by weight and for which the weight condition is not set.

(5-1-4-2)
The control unit 130 of this example modification, in the mode in which it weighs with the weighing unit 10 and wraps with the wrapping unit 30 a first product (here, a product sold by weight) whose price is calculated based on the weighing result in the weighing unit 10, causes wrapping of the first product by the wrapping unit 30 to be performed when the weighing result is equal to or greater than the first weight, and, in the mode in which it weighs with the weighing unit 10 and wraps with the wrapping unit 30 a second product (here, a fixed-price product) whose price is fixed regardless of the weighing result in the weighing unit 10, causes wrapping of the second product by the wrapping unit 30 to be performed when the weighing result is equal to or greater than the second weight, and the second weight is smaller than the first weight. Because of this, even in a case where the weighing result of the product is smaller than the first weight, the wrapping item placed on the weighing unit 10 can be wrapped in the wrapping unit 30 if the weighing result is greater than the second weight.

In this case, the wrapping apparatus of this example modification can make a product for which the price condition is set, a product that is sold by weight and for which the weight condition is set, a product that is sold by weight and for which the weight condition is not set, and a fixed-price product.

(5-1-4-3)
The first weight is a minimum measurement amount decided by the accuracy class of the weighing unit 10. Because of this, even in a case where the weighing result of the wrapping item is smaller than the minimum measurement amount, the wrapping item placed on the weighing unit can be wrapped in the wrapping unit 30 if the weighing result is equal to or greater than the second weight.

(5-1-4-4)
The second weight is a preset fixed value. Because of this, even in the case of wrapping a fixed-price product whose weight is smaller than the minimum measurement amount, the preset fixed value can be used to wrap in the wrapping unit 30 the wrapping item loaded on the weighing unit 10. This fixed value is enough of a value for the weighing unit 10 itself to be able to recognize it when the wrapping item is loaded on the weighing unit 10 even if the wrapping item is, for example, a lightweight product.

(5-1-4-5)
The control unit 130 starts conveyance of the first product loaded on the weighing unit 10 when the weighing result is equal to or greater than the first weight and starts conveyance of the second product loaded on the weighing unit 10 when the weighing result is equal to or greater than the second weight. Because of this, even in a case where the weighing result of the wrapping item is smaller than the first weight, the conveyance unit 20 can start conveyance of the wrapping item loaded on the weighing unit 10 if the weighing result is equal to or greater than the second weight. Consequently, it is no longer necessary to place on the weighing unit 10 a weight for causing the conveyance unit 20 to start.

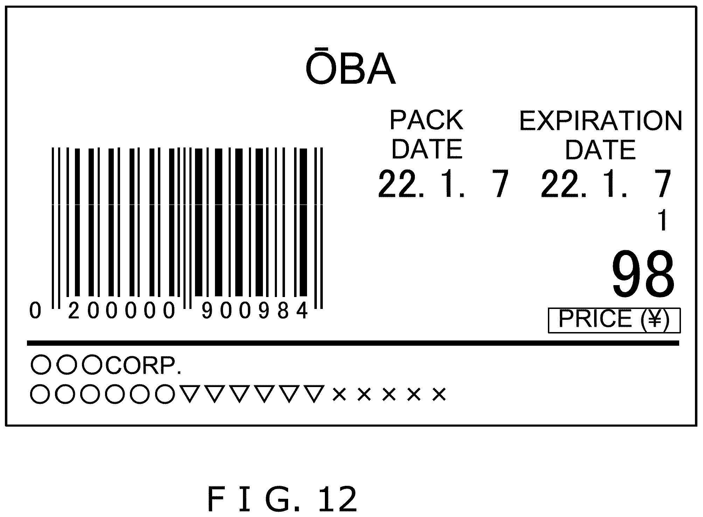

(5-1-4-6)
In the case of the fixed-price product, in step S24 the control unit 130 causes the label printer to print predetermined information relating to the product if the weighing result is equal to or greater than the second weight. Because of this, even in a case where the weighing result of the product is smaller than the first weight which is the minimum weight necessary for printing, a label relating to information relating to a product outside the weighing result can be generated if the weighing result is equal to or greater than the second weight. FIG. 12 shows an example of such a label.

### (5-2) Example Modification B

In the above embodiment, tomatoes were described as an example of the wrapping item, but the product made by the wrapping apparatus is not limited. For example, the wrapping item judged to be a fixed-price product in step S31 of FIG. 9 may also be o̅ba (green shiso leaves), ki-no-me (young sanshb leaves), or taka-no-tsume (to̅garashi).

### (5-3) Example Modification C

In the above embodiment and example modification A, the price condition has an upper limit price and a lower limit price, but the price condition is not limited to this. The price condition has at least one of an upper limit price and a lower limit price. That is, the price condition includes a case where it has only an upper limit price, a case where it has only a lower limit price, and a case where it has an upper limit price and a lower limit price.

### (5-4) Example Modification D

In example modification A above, the weight condition includes an upper limit weight and a lower limit weight, but the weight condition is not limited to this. The weight condition has at least one of an upper limit weight and a lower limit weight. That is, the weight condition includes a case where it has only an upper limit weight, a case where it has only a lower limit weight, and a case where it has an upper limit weight and a lower limit weight.

### (5-5) Example Modification E

In the above embodiment, the wrapping apparatus 100 includes the label issuing unit 40, but the label issuing unit 40 may also be omitted. Furthermore, the wrapping apparatus may include the label printer 41 but not the label application unit 42. In this case, the user applies the label issued by the label printer 41 to the product wrapped by the wrapping apparatus 100.

### (5-6) Example Modification F

In the above embodiment, an example was described where the wrapping unit 30 wraps in the film the wrapping item placed in a container such as a tray, but depending on the product, the wrapping unit 30 may also wrap the product directly in the film without using a container such as a tray.

### REFERENCE SIGNS LIST

- 10: Weighing Unit
- 20: Conveyance Unit
- 30: Wrapping Unit
- 41: Label Printer
- 42: Label Application Unit
- 51: Display Unit
- 52: Input Unit
- 100: Wrapping Apparatus
- 121: Product Master
- 130: Control Unit

## Claims

1. A wrapping apparatus (100) configured to wrap a wrapping item in a film to make a product, the wrapping apparatus comprising:
a weighing unit (10) configured to weigh the wrapping item;
a wrapping unit (30) configured to wrap the wrapping item in the film; and
a control unit (130) configured to switch the operation of the wrapping unit (30) depending on whether or not the product is a product for which a price condition is set,
**characterized in that**
in a case where the control unit (130) judges that the product is a product for which the price condition is set, the control unit (130) is configured to calculate a price of the product based on the weighing result in the weighing unit (10), and
when the calculated price meets the price condition, the control unit (130) is configured to cause wrapping of the wrapping item by the wrapping unit (30) to be executed, and
when the calculated price does not meet the price condition, the control unit (130) configured not to cause wrapping of the wrapping item by the wrapping unit (30) to be executed.

2. The wrapping apparatus (100) according to claim 1, wherein the control unit (130) is configured to perform:
a first operating mode where, in the case of a product for which the price condition is not set, if the weighing value in the weighing unit (10) is stable, the control unit (130) wraps in the wrapping unit (30) the wrapping item loaded on the weighing unit (10) and
a second operating mode where, in the case of a product for which the price condition is set, the control unit (130) calculates a selling price of the wrapping item based on the weight of the wrapping item when the weighing value in the weighing unit (10) is stable and the price per unit weight and, if the selling price meets the price condition, the control unit (130) wraps in the wrapping unit (30) the wrapping item loaded on the weighing unit (10).

3. The wrapping apparatus (100) according to claim 1, wherein the control unit (130) is configured to perform a third operating mode where, in the case of a product for which the price condition and a weight condition are set, the control unit (130) calculates a selling price of the wrapping item based on the weight of the wrapping item
when the weighing value in the weighing unit (10) is stable and the price per unit weight and,
if the selling price meets the price condition and the weight of the wrapping item when the weighing value in the weighing unit (10) is stable meets the weight condition, the control unit (130) wraps in the wrapping unit (30) the wrapping item loaded on the weighing unit (10).

4. The wrapping apparatus (100) according to any one of claims 1 to 3, further comprising an input unit (52) configured to input the price condition,
wherein the control unit (130) is configured to judge that the product is a product for which the price condition is set in a case where the price condition has been input from the input unit (52).

5. The wrapping apparatus (100) according to any one of claims 1 to 4, further comprising a product master configured to store product information about the product,
wherein the control unit (130) is configured to judge that the product is a product for which the price condition is set in a case where the price condition is included in the product information called up from the product master.

6. The wrapping apparatus (100) according to any one of claims 1 to 5, wherein the price condition is a price range when selling the product.

7. The wrapping apparatus (100) according to any one of claims 1 to 6, further comprising a label printer (41) configured to print information about the product on a label.

8. The wrapping apparatus (100) according to claim 7, further comprising a label application unit (42) configured to apply the label to the product.

## Patentansprüche

1. Einwickelvorrichtung (100), die konfiguriert ist, einen Einwickelgegenstand in eine Folie einzuwickeln, um ein Produkt herzustellen, wobei die Einwickelvorrichtung aufweist:
eine Wiegeeinheit (10), die konfiguriert ist, den Einwickelgegenstand zu wiegen;
eine Einwickeleinheit (30), die konfiguriert ist, den Einwickelgegenstand in die Folie einzuwickeln; und
eine Steuereinheit (130), die konfiguriert ist, den Betrieb der Einwickeleinheit (30) abhängig davon umzuschalten, ob das Produkt ein Produkt ist, für das eine Preisbedingung festgelegt ist oder nicht,
**dadurch gekennzeichnet, dass**
in einem Fall, in dem die Steuereinheit (130) beurteilt, dass das Produkt ein Produkt ist, für das die Preisbedingung festgelegt ist, die Steuereinheit (130) konfiguriert ist, einen Preis des Produkts basierend auf dem Wiegeergebnis in der Wiegeeinheit (10) zu berechnen, und
wenn der berechnete Preis die Preisbedingung erfüllt, die Steuereinheit (130) konfiguriert ist, zu bewirken, dass das Einwickeln des Einwickelgegenstands durch die Einwickeleinheit (30) ausgeführt wird, und
wenn der berechnete Preis die Preisbedingung nicht erfüllt, die Steuereinheit (130) konfiguriert ist, nicht zu bewirken, dass das Einwickeln des Einwickelgegenstand durch die Einwickeleinheit (30) ausgeführt wird.

2. Einwickelvorrichtung (100) nach Anspruch 1, wobei die Steuereinheit (130) konfiguriert ist, auszuführen:
einen ersten Betriebsmodus, bei dem im Fall eines Produkts, für das die Preisbedingung nicht festgelegt ist, wenn der Wiegewert in der Wiegeeinheit (10) stabil ist, die Steuereinheit (130) in der Einwickeleinheit (30) den auf die Wiegeeinheit (10) geladenen Einwickelgegenstand einwickelt, und
einen zweiten Betriebsmodus, bei dem im Falle eines Produkts, für das die Preisbedingung festgelegt ist, die Steuereinheit (130) einen Verkaufspreis des Einwickelgegenstands basierend auf dem Gewicht des Einwickelgegenstands, wenn der Wiegewert in der Wiegeeinheit (10) stabil ist, und dem Preis pro Gewichtseinheit berechnet, und wenn der Verkaufspreis die Preisbedingung erfüllt, die Steuereinheit (130) in der Einwickeleinheit (30) den auf die Wiegeeinheit (10) geladenen Einwickelgegenstand einwickelt.

3. Einwickelvorrichtung (100) nach Anspruch 1, wobei die Steuereinheit (130) konfiguriert ist, einen dritten Betriebsmodus auszuführen, bei dem im Fall eines Produkts, für das die Preisbedingung und eine Gewichtsbedingung eingestellt sind, die Steuereinheit (130) einen Verkaufspreis des Einwickelgegenstands basierend auf dem Gewicht des Einwickelgegenstands, wenn der Wiegewert in der Wiegeeinheit (10) stabil ist, und dem Preis pro Gewichtseinheit berechnet, und
wenn der Verkaufspreis die Preisbedingung erfüllt und das Gewicht des Einwickelgegenstands, wenn der Wiegewert in der Wiegeeinheit (10) stabil ist, die Gewichtsbedingung erfüllt, die Steuereinheit (130) den in die Wiegeeinheit (10) geladenen Einwickelgegenstand in der Einwickeleinheit (30) einwickelt.

4. Einwickelvorrichtung (100) nach einem der Ansprüche 1 bis 3, die ferner eine Eingabeeinheit (52) aufweist, die konfiguriert ist, die Preisbedingung einzugeben,
wobei die Steuereinheit (130) konfiguriert ist, zu beurteilen, dass das Produkt ein Produkt ist, für das die Preisbedingung festgelegt ist, wenn die Preisbedingung von der Eingabeeinheit (52) eingegeben wurde.

5. Einwickelvorrichtung (100) nach einem der Ansprüche 1 bis 4, die ferner einen Produktstamm aufweist, der konfiguriert ist, Produktinformationen über das Produkt zu speichern,
wobei die Steuereinheit (130) konfiguriert ist, zu beurteilen, dass das Produkt ein Produkt ist, für das die Preisbedingung festgelegt ist, wenn die Preisbedingung in den Produktinformationen enthalten ist, die aus dem Produktstamm abgerufen werden.

6. Einwickelvorrichtung (100) nach einem der Ansprüche 1 bis 5, wobei die Preisbedingung eine Preisspanne beim Verkauf des Produkts ist.

7. Einwickelvorrichtung (100) nach einem der Ansprüche 1 bis 6, die ferner einen Etikettendrucker (41) aufweist, der konfiguriert ist, Informationen über das Produkt auf ein Etikett zu drucken.

8. Einwickelvorrichtung (100) nach Anspruch 7, die ferner eine Etikettenanbringungseinheit (42) aufweist, die konfiguriert ist, das Etikett am Produkt anzubringen.

## Revendications

1. Appareil d'emballage (100), prévu pour envelopper un article à emballer dans un film pour obtenir un produit, ledit appareil d'emballage comprenant :
une unité de pesage (10) prévue pour peser l'article à emballer ;
une unité d'emballage (30) prévue pour envelopper l'article à emballer dans le film ; et
une unité de commande (130) prévue pour commuter le fonctionnement de l'unité d'emballage (30) selon que le produit est ou non un produit pour lequel une condition de prix est fixée, **caractérisé en ce que**,
dans le cas où l'unité de commande (130) estime que le produit est un produit pour lequel la condition de prix est fixée, ladite unité de commande (130) est prévue pour calculer un prix du produit sur la base du résultat de pesée dans l'unité de pesée (10), et,
si le prix calculé correspond à la condition de prix, l'unité de commande (130) est prévue pour déclencher l'exécution de l'emballage de l'article à emballer par l'unité d'emballage (30), et,
si le prix calculé ne correspond pas à la condition de prix, l'unité de commande (130) est prévue pour ne pas déclencher l'exécution de l'emballage de l'article à emballer par l'unité d'emballage (30).

2. Appareil d'emballage (100) selon la revendication 1, où l'unité de commande (130) est prévue pour appliquer :
un premier mode de fonctionnement où, dans le cas d'un produit pour lequel la condition de prix n'est pas fixée, lorsque la valeur de pesage dans l'unité de pesage (10) est stable, l'unité de commande (130) emballe dans l'unité d'emballage (30) l'article à emballer chargé sur l'unité de pesage (10) et
un deuxième mode de fonctionnement où, dans le cas d'un produit pour lequel la condition de prix est fixée, l'unité de commande (130) calcule un prix de vente de l'article à emballer sur la base du poids de l'article à emballer lorsque la valeur de pesage dans l'unité de pesage (10) est stable, et du prix par unité de poids et, si le prix de vente correspond à la condition de prix, l'unité de commande (130) emballe dans l'unité d'emballage (30) l'article à emballer chargé sur l'unité de pesage (10).

3. Appareil d'emballage (100) selon la revendication 1, où l'unité de commande (130) est prévue pour appliquer un troisième mode de fonctionnement où, dans le cas d'un produit pour lequel la condition de prix et une condition de poids sont fixées, l'unité de commande (130) calcule un prix de vente de l'article à emballer sur la base du poids de l'article à emballer lorsque la valeur de pesage dans l'unité de pesage (10) est stable, et du prix par unité de poids et,
si le prix de vente correspond à la condition de prix et que le poids de l'article à emballer lorsque la valeur de pesage dans l'unité de pesage (10) est stable correspond à la condition de poids, l'unité de commande (130) emballe dans l'unité d'emballage (30) l'article à emballer chargé sur l'unité de pesage (10).

4. Appareil d'emballage (100) selon l'une des revendications 1 à 3, comprenant en outre une unité d'entrée (52) prévue pour entrer la condition de prix,
où l'unité de commande (130) est prévue pour estimer que le produit est un produit pour lequel la condition de prix est fixée dans le cas où la condition de prix a été entrée par l'unité d'entrée (52).

5. Appareil d'emballage (100) selon l'une des revendications 1 à 4, comprenant en outre une base de données de produit prévue pour stocker des informations sur le produit,
où l'unité de commande (130) est prévue pour estimer que le produit est un produit pour lequel la condition de prix est fixée dans le cas où la condition de prix est incluse dans les informations de produit appelées depuis la base de données de produit.

6. Appareil d'emballage (100) selon l'une des revendications 1 à 5, où la condition de prix est une fourchette de prix lors de la vente du produit.

7. Appareil d'emballage (100) selon l'une des revendications 1 à 6, comprenant en outre une imprimante d'étiquettes (41) prévue pour imprimer des informations relatives au produit sur une étiquette.

8. Appareil d'emballage (100) selon la revendication 7, comprenant en outre une unité d'application d'étiquette (42) prévue pour appliquer l'étiquette sur le produit.
